# EUROPEAN PATENT APPLICATION

(11) **EP 1 031 984 A1**
(43) Date of publication of application: **30.08.2000**
(21) Application number: 99101778.1
(22) Date of filing: 15.02.1999
(51) Int. Cl.: G11B 33/04, G11B 23/03

(54) **Storage modules for objects**

(71) Applicant: Chen, Chin-Min, Tan Tsu Hsiang, Taichung Hsien (TW)
(72) Inventor: Chen, Chin-Min, Tan Tsu Hsiang, Taichung Hsien (TW)
(74) Representative: Casalonga, Axel

(57) **Abstract**

A storage module includes a top cover plate (15), a bottom cover plate (10), and a plurality of holder units (20) stacked between the top cover plate and the bottom cover plate. Each holder unit includes a base plate (21), a holder plate (27) slidably received in the base plate, and a push-out device (30). The base plate (21) includes a longitudinal slot (26) and two oblique guiding grooves (25) formed on two sides of the longitudinal slot (26), respectively. The holder plate (27) is movable between a received position in the base plate and an extended position partially outside the base plate under action of a torsional spring (33) of the push-out device (30). The holder plate (27) includes a resilient retaining strip (29) having an operative free end with a retaining member (290) thereon for releasably engaging with a stop means (231) of the base plate (21) to retain the holder plate in the received position in the base plate. The push-out device (30) includes a first rod (31) and a second rod (32) that are cross-hinged at their mediate portions by a pivotal axle (312). The pivotal axle (312) is movable along the longitudinal slot (26). The first rod (31) includes a first end (310) slidably received in one of the oblique guiding grooves (25) and a second end (311) slidably received in an end of a transverse track (272) in the holder plate (27). The second rod (32) includes a first end (320) slidably received in the other oblique guiding groove (25) and a second end (312) slidably received in the other end of the transverse track (272). The torsional spring (33) is mounted around the pivotal axle for biasing the first rod (31) and the second rod (32) to move one relative to the other.

## Description

### Background of the Invention

### 1. Field of the Invention

The present invention relates to storage modules for objects, e.g., compact disks (CDs), digital video disks (DVDs), laser disks (LDs), stationery, etc.

### 2. Description of the Related Art

Optical disks have been widely used to storage video and/or audio data, as they are stable and the quality is reliable. Since data stored in the optical disks is apt to be damaged, for storage and transportation, a protective holder is required for an individual optical disk to prevent the optical disk from being contaminated by water or dust and/or damaged by scrapping or cutting.

A typical protective holder for receiving an optical disk generally includes two pivotally connected plastic shells that requires the user to open it by both hands. In addition, the protective holders are separate one from another and are thus inconvenient to the user if a multiplicity of protective holders is involved.

The present invention is intended to provide improved storage modules that mitigate and/or obviate the above problems.

### Summary of the Invention

It is a primary object of the present invention to provide an improved storage module for receiving a multiplicity of optical disks, wherein storage and retrieval of each optical disk can be easily accomplished to allow the user to manage the optical disks easily.

A storage module in accordance with the present invention comprises a top cover plate, a bottom cover plate, and a plurality of holder units stacked between the top cover plate and the bottom cover plate. Each holder unit comprises a base plate including a longitudinal track means and two oblique guiding grooves formed on two sides of the longitudinal track means, respectively. A holder plate is slidably received in the base plate and movable between a received position in the base plate and an extended position partially outside the base plate. The holder plate includes a transverse track. The holder plate further includes a resilient retaining strip having an operative free end with a retaining member thereon for releasably engaging with a stop means of the base plate.

Each holder unit further comprises a push-out device including a first rod and a second rod that are cross-hinged at their mediate portions by a pivotal axle. The pivotal axle is movable along the longitudinal track means. The first rod includes a first end slidably received in one of the oblique guiding grooves and a second end slidably received in an end of the transverse track. The second rod includes a first end slidably received in the other oblique guiding groove and a second end slidably received in the other end of the transverse track. A torsional spring is mounted around the pivotal axle for biasing the first rod and the second rod to move one relative to the other.

When the holder plate is in its received position, the retaining member of the resilient retaining strip is stopped by the stop means of the base plate to retain the holder plate in place, and the torsional spring is in a twisted status.

When the resilient retaining strip is pressed, the retaining member disengages from the stop means of the base plate such that the holder base is pushed out of the base plate to its extended position under the action of the torsional spring.

The longitudinal track means may be a slot.

In one embodiment of the invention, the base plate includes two parallel longitudinal rails. The base plate includes two lateral wall portions that together with the rails define two sliding grooves. The holder plate includes two lateral walls slidably received in the sliding grooves, respectively. At least one of the rails includes a first stop on a front end thereof, and at least one of the lateral walls of the holder plate includes a second stop for engaging with the first stop to prevent excessive forward movement of the holder plate.

The stop means of the base plate may be a front end wall portion of a downwardly extending peripheral wall of the base plate.

The holder plate includes a recess for receiving objects, e.g., stationery or an optical disk. The holder plate may further include two diametrically disposed finger holes that intersect a periphery of the recess to allow easy insertion or removal of the optical disk.

In a preferred embodiment of the invention, the bottom cover plate includes a plurality of first hooks formed on a peripheral wall thereof. The top cover plate includes a plurality of first recesses defined in a peripheral wall thereof. The base plate of each holder unit includes a plurality of second hooks formed on an upper side thereof and a plurality of second recesses defined in a peripheral wall thereof. The second hooks of the base plate of a lower holder unit are releasably engaged with the second recesses of the base plate of an upper holder unit right above the lower holder unit. The second hooks of the base plate of the topmost holder unit are releasably engaged with the first recesses of the top cover plate. The first hooks of the bottom cover plate are releasably engaged with the second recesses of the base plate of the bottommost holder unit.

The top cover plate further includes at least one slot defined in each of two lateral sides thereof for combining with another storage module by means of extending a U-shaped connecting member through two juxtaposed slots of two juxtaposed storage modules.

Other objects, advantages, and novel features of the invention will become more apparent from the following detailed description when taken in conjunction with the accompanying drawings.

### Brief Description of the Drawings

Fig. 1 is a perspective view of a storage module for optical disks in accordance with the present invention;
Fig. 2 is an exploded top perspective view of the storage module for optical disks in accordance with the present invention;
Fig. 3 is an exploded bottom perspective view of an optical disk holder unit of the storage module for optical disks in accordance with the present invention;
Fig. 4 is a sectional view taken along line 4-4 in Fig. 1;
Fig. 5 is a partial perspective view, partly cutaway, of the storage module for optical disks in accordance with the present invention;
Fig. 6 is a plan view of the optical disk holder unit that is turned upside-down, wherein the holder plate is in a received position;
Fig. 7 is a plan view similar to Fig. 6, wherein the holder plate is in an extended position;
Fig. 8 is a perspective view similar to Fig. 1, wherein the number of the optical disk holder unit is increased;
Fig. 9 is a perspective view illustrating two combined storage modules in accordance with the present invention; and
Fig. 10 is an exploded perspective view illustrating a modified embodiment of a holder unit of the storage module in accordance with the present invention.

### Detailed Description of the Preferred Embodiments

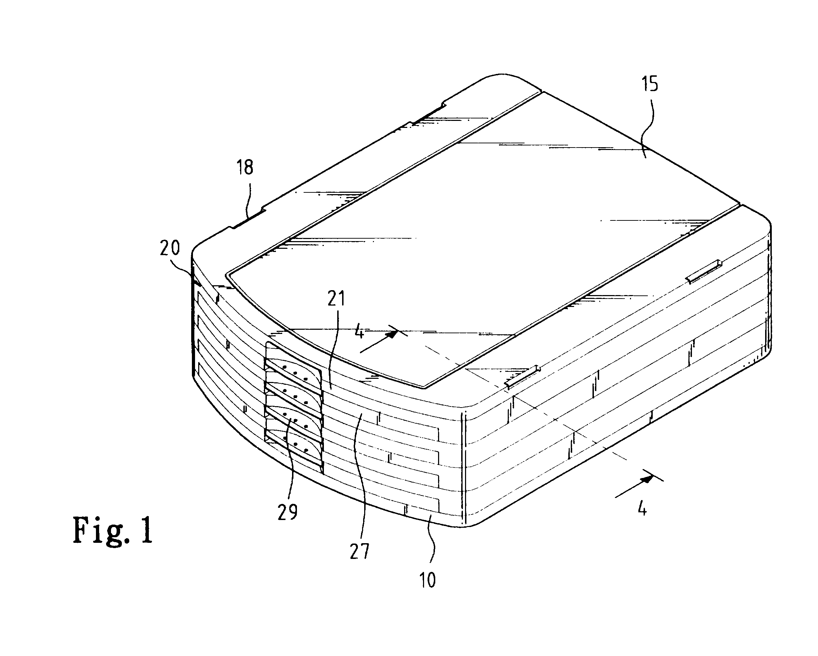

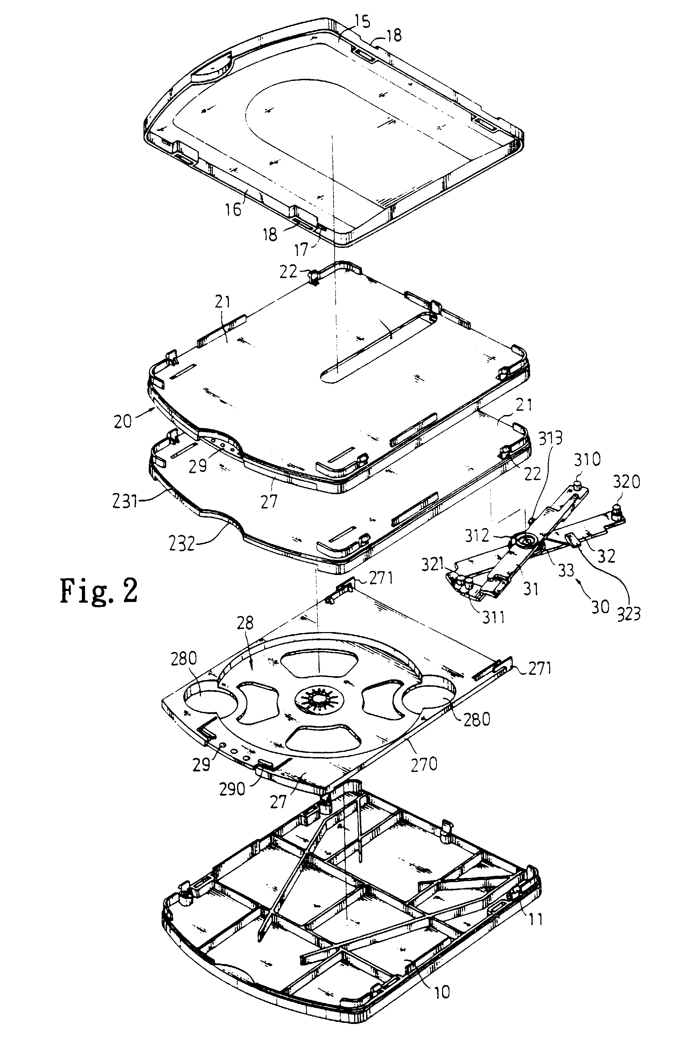

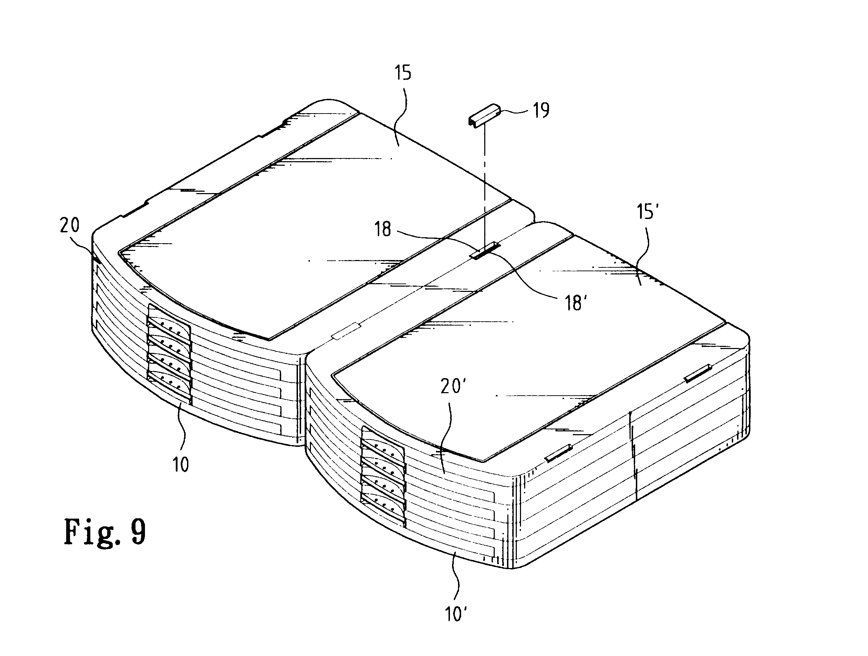

Referring to the drawings and initially to Figs. 1 and 2, a storage module for optical disks in accordance with the present invention generally includes a top cover plate 15, a bottom cover plate 10, and a plurality of optical disk holder units 20 stacked between the top cover plate 15 and the bottom cover plate 10. Referring to Fig. 2, the bottom cover plate 10 includes a plurality of upright hooks 11 formed on a peripheral wall (not labeled) thereof for releasably engaging with a bottommost optical disk holder unit 20. The top cover plate 15 includes a plurality of slots or recesses 17 defined in a peripheral wall 16 thereof for releasably engaging with an uppermost optical disk holder unit 20. The top cover plate 15 further includes at least one slot 18 defined in each of two lateral sides thereof for engaging with another storage module by U-shaped connecting members 19 (Fig. 9), which will be described later.

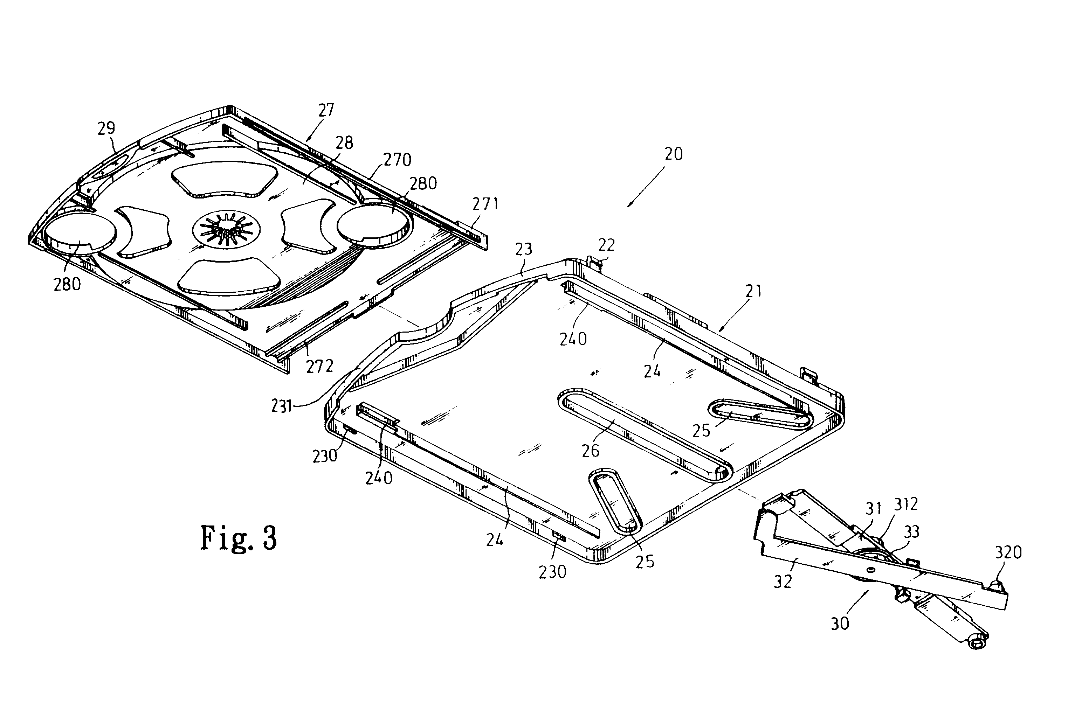

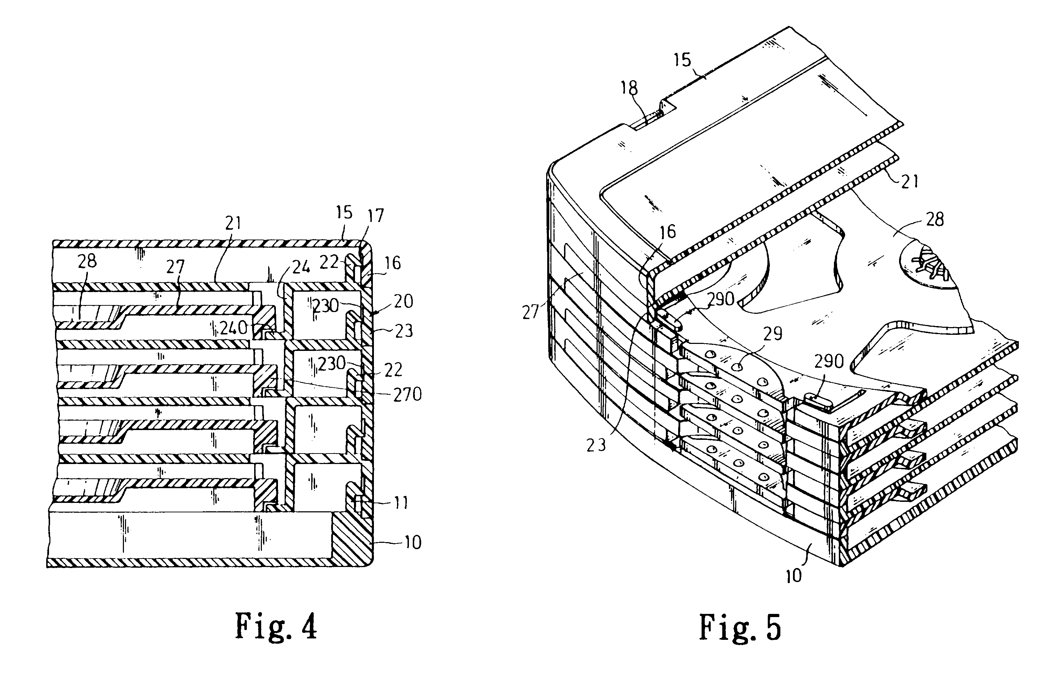

Referring to Figs. 2 and 3, each optical disk holder unit 20 includes a base plate 21, a holder plate 27 slidably received in the base plate 21 and a push-out device 30. The base plate 21 includes a plurality of upright hooks 22 formed on an upper side thereof and a plurality of slots or recesses 230 defined in a downwardly extending peripheral wall 23 thereof. Thus, the hooks 22 of the base plate 21 of a lower holder unit 20 are releasably engaged with the recesses 230 of the base plate 21 of an upper holder unit 20 right above the lower holder unit 20. In addition, the hooks 22 of the base plate 21 of the topmost holder unit 20 are releasably engaged with the recesses 17 of the top cover plate 15, and the hooks 11 of the bottom cover plates 10 are releasably engaged with the recesses 230 of the base plate 21 of the bottommost holder unit 20, best shown in Figs. 4 and 5.

The holder plate 27 includes two downwardly extending walls 270 respectively formed on two lateral sides thereof. The base plate 21 includes a pair of parallel longitudinal rails 24 formed on an underside thereof. The rails 24 together with two lateral wall portion of the peripheral wall 23 define two sliding grooves (not labeled) for slidingly receiving the walls 270 of the holder plate 27, respectively, thereby guiding sliding movements of the holder plate 27. Each rail 24 includes a stop 240 on a front end thereof, and each lateral wall 270 includes a stop 271 on a rear end thereof to engage with the stop 240 of the associated rail 24 to thereby prevent excessive forward movement of the holder plate 27 relative to the base plate 21. The holder plate 27 further includes a transverse track 272 defined in an underside thereof, best shown in Fig. 3, which will be described later. The holder plate 27 further includes a resilient retaining plate 29 that has an inner end integrally formed with the holder plate 27 and an exposed outer end for manual operation. The resilient retaining plate 29 includes at least one retaining member 290 (two retaining members 290 in this embodiment) for releasably engaging with a front end wall portion 231 of the peripheral wall 23 of the associated base plate 21, which will be described later. The front end wall portion 231 of the peripheral wall 23 of the base plate 21 includes a recessed section 232 (Fig. 2) to expose the outer end of the resilient retaining strip 29 for manual operation.

The holder plate 27 further includes a substantially circular recess 28 in an upper side thereof and two diametrically opposed finger holes 280 intersected with a periphery that defines the recess 28 for easy insertion or removal of an optical disk into the recess 28, which is conventional and therefore not described in detail.

The base plate 21 further includes a longitudinal track means (e.g., a slot 26) in a mediate portion thereof. In addition, two oblique guiding grooves 25 are defined in an underside of the base plate 21 and located on both sides of the longitudinal slot 26, respectively. The front end of each oblique guiding groove 25 is closer to the longitudinal slot 26 than the rear end is.

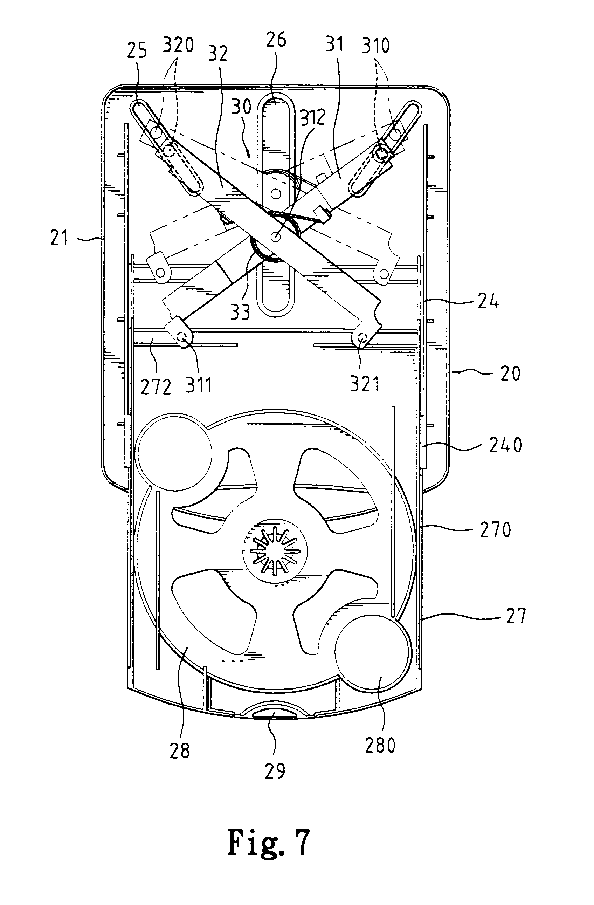

Still referring to Figs. 2 and 3, the push-out device 30 includes a first rod 31 and a second rod 32 that are cross-hinged at their mediate portions by a pivotal axle 312. The pivotal axle 312 is slidably mounted in the longitudinal slot 26. The first rod 31 includes a first stub 310 formed a first end thereof and a second stub 311 formed on a second end thereof The second rod 32 includes a first stub 320 formed on a first end thereof and a second stub 321 formed on a second end thereof. The first stub 310 of the first rod 31 is slidably received in one of the oblique guiding grooves 25, while the first stub 320 of the second rod 32 is slidably received in the other oblique guiding groove 25. In addition, the second stub 311 of the first rod 31 is slidably received in an end of the transverse track 272 of the base plate 21, and the second stub 321 of the second rod 32 is slidably received in the other end of the transverse track 272 of the base plate 21, best shown in Fig. 7. The first rod 31 includes an attachment piece 313 (Fig. 2) to which an end of a torsional spring 33 is attached, and the second rod 32 includes an attachment piece 323 (Fig. 2) to which the other end of the torsional spring 33 is attached. The torsional spring 33 is mounted around the pivot axle 312 to bias the first rod 31 and the second rod 32 to move one relative to the other.

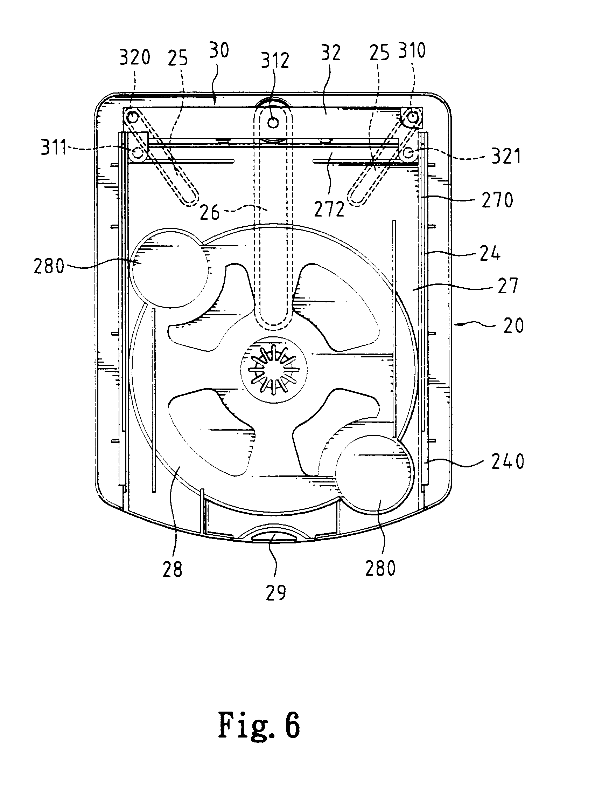

Operation of each holder unit 20 is described as follows. When the holder plate 27 is moved to a received position shown in Fig. 6, the ends of the torsional spring 32 are moved toward each other to store elasticity. The retaining members 290 of the retaining strip 29 of the holder plate 21 are stopped by the front end wall portion 231 of the base plate 21. As can be seen from Fig. 6, the pivotal axle 312 is in a rear end of the longitudinal slot 26, the first stubs 310 and 320 are in the rear ends of the oblique guiding grooves 25, respectively, and the second stubs 311 and 321 are in two ends of the transverse track 272, respectively.

When the exposed outer end of the resilient retaining strip 29 is pressed, the retaining members 290 disengage from the front end wall portion 231 of the base plate 21, such that the holder plate 27 is pushed out of the base plate 21 to an extended position under the action of the torsional spring 312, as shown in Fig. 7. It is appreciated that the pivotal axle 312 moves forwardly along the longitudinal slot 26, the first stubs 310 and 320 move toward the front ends of the oblique guiding grooves 25, respectively, and the second stubs 311 and 321 move inwardly along the transverse track 272. Thus, the user may insert or remove an optical disk into or from the recess 28 of the holder plate 27. The user may simply push the holder plate 27 into the base plate 21 and make the retaining members 290 re-engage with the front end wall portion 231 of the base plate 21 (by means of slightly pressing the resilient retaining strip 29 downwardly when it approaches the base plate 21), thereby providing a reliable storage for the optical disk.

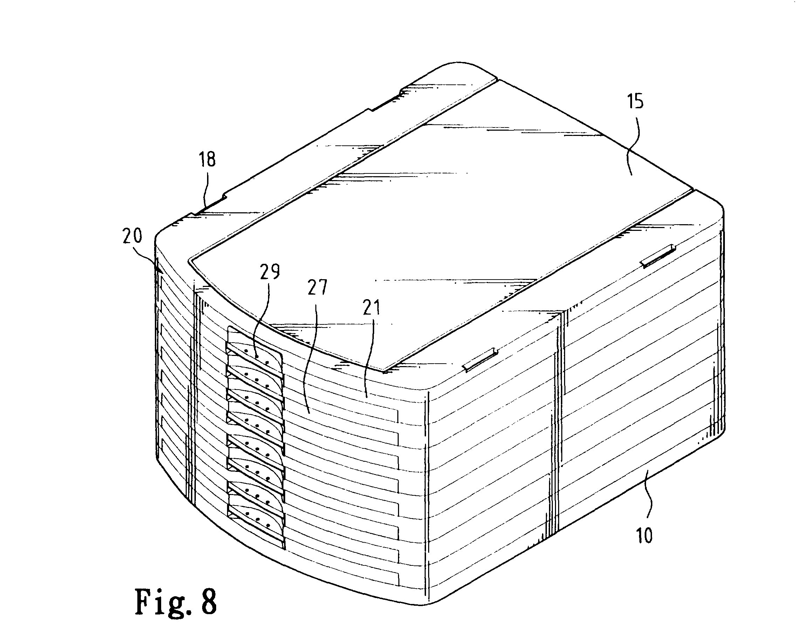

The number of the holder units 20 of the storage module in accordance with the present invention is optional, and Fig. 8 illustrates an embodiment of the storage module with more holder units 20. In addition, two or more storage modules in accordance with the present invention can be connected together by means of fitting U-shaped connecting members 19 into juxtaposed slots 18 and 18' of two juxtaposed storage modules, as shown in Fig. 9.

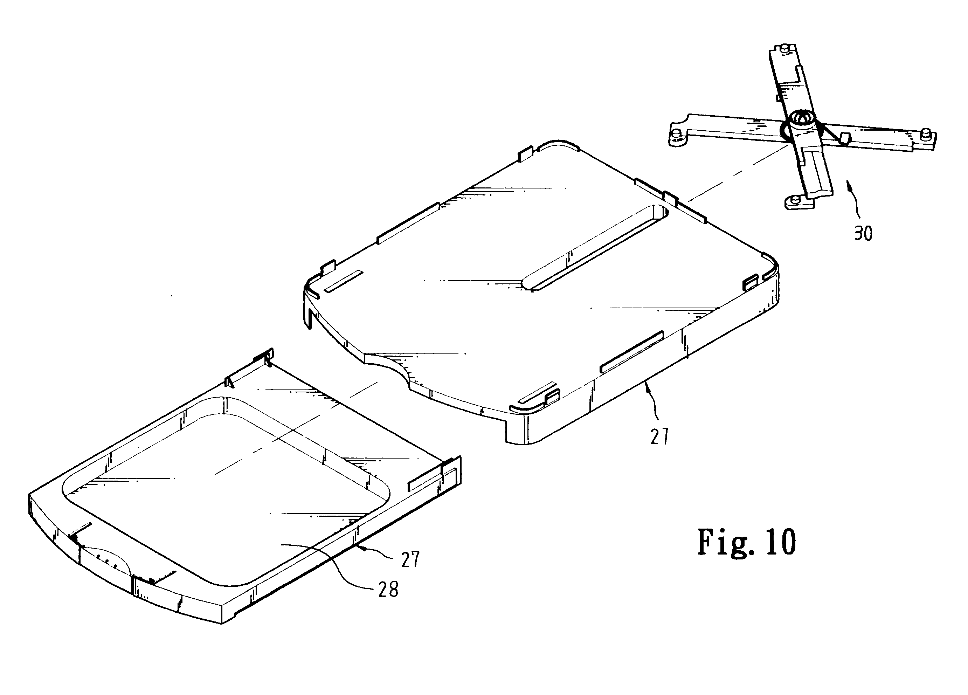

Fig. 10 illustrates a modified embodiment of the holder plate 27, wherein the holder plate 27 includes a recess 28' defined in an upper side thereof for receiving objects other than optical disks, e.g., stationery. Assembly and operation of this modified embodiment are identical to those of the embodiment in Figs. 1 and 2 and therefore not described to avoid redundancy.

Although the invention has been explained in relation to its preferred embodiment, it is to be understood that many other possible modifications and variations can be made without departing from the spirit and scope of the invention as hereinafter claimed.

## Claims

1. A storage module comprising a top cover plate (15), a bottom cover plate (10), and a plurality of holder units (20) stacked between the top cover plate and the bottom cover plate, characterized in that:
each said holder unit comprises:
a base plate (21) including a longitudinal track means (26) and two oblique guiding grooves (25) formed on two sides of the longitudinal track means (26), respectively, the base plate further including a stop means (231),
a holder plate (27) slidably received in the base plate (21) and movable between a received position in the base plate and an extended position partially outside the base plate, the holder plate (27) including a transverse track (272), the holder plate (27) further including a resilient retaining strip (29) having an operative free end with a retaining member (290) thereon for releasably engaging with the stop means (231) of the base plate (21), and
a push-out device including a first rod (31) and a second rod (32) that are cross-hinged at their mediate portions by a pivotal axle (312), said pivotal axle (312) being movable along the longitudinal track means (26), said first rod (31) including a first end (310) slidably received in one of the oblique guiding grooves (25) and a second end (311) slidably received in an end of the transverse track (272), said second rod (32) including a first end (320) slidably received in the other oblique guiding groove (25) and a second end (312) slidably received in the other end of the transverse track (272), and a torsional spring (33) mounted around the pivotal axle for biasing the first rod (31) and the second rod (32) to move one relative to the other,
whereby when the holder plate (27) is in its received position, the retaining member (290) of the resilient retaining strip (29) is stopped by the stop means (231) of the base plate (21) to retain the holder plate (27) in place, and the torsional spring (33) is in a twisted status, and
when the resilient retaining strip (29) is pressed, the retaining member (290) disengages from the stop means (23) of the base plate (21) such that the holder base (27) is pushed out of the base plate (21) to its extended position under the action of the torsional spring (33).

2. The storage module as claimed in claim 1, wherein the longitudinal track means is a slot (26).

3. The storage module as claimed in claim 1, wherein the base plate (21) includes two parallel longitudinal rails (24), the base plate (21) includes two lateral wall portions that together with said rails (24) define two sliding grooves, and wherein the holder plate (27) includes two lateral walls (270) slidably received in the sliding grooves, respectively.

4. The storage module as claimed in claim 3, wherein at least one of the rails (24) includes a first stop (240) on a front end thereof, and at least one of said lateral walls (270) of the holder plate (27) includes a second stop (271) for engaging with said first stop (240) to prevent excessive forward movement of the holder plate (27).

5. The storage module as claimed in claim 1, wherein the stop means of the base plate (21) is a front end wall portion (231) of a downwardly-extending peripheral wall (23) of the base plate (21).

6. The storage module as claimed in claim 1, wherein the holder plate (27) includes a recess (28') for receiving objects.

7. The storage module as claimed in claim 1, wherein the holder plate (27) includes a recess (28) for receiving an optical disk.

8. The storage module as claimed in claim 7, further including two diametrically disposed finger holes (280) that intersect a periphery of the recess (28).

9. The storage module as claimed in claim 1, wherein the bottom cover plate (10) includes a plurality of first hooks (11) formed on a peripheral wall thereof, the top cover plate (15) includes a plurality of first recesses (17) defined in a peripheral wall (16) thereof, and the base plate (21) of each said holder unit (20) includes a plurality of second hooks (22) formed on an upper side thereof and a plurality of second recesses (230) defined in a peripheral wall (23) thereof, wherein the second hooks (22) of the base plate (21) of a lower holder unit (20) are releasably engaged with the second recesses (230) of the base plate (21) of an upper holder unit (20) right above the lower holder unit (20), the second hooks (22) of the base plate (21) of the topmost holder unit (20) are releasably engaged with the first recesses (17) of the top cover plate (15), and the first hooks (11) of the bottom cover plate (10) are releasably engaged with the second recesses (230) of the base plate (21) of the bottommost holder unit (20).

10. The storage module as claimed in claim 1, wherein the top cover plate (15) further includes at least one slot (18) defined in each of two lateral sides thereof for combining with another storage module by means of extending a U-shaped connecting member (19) through two juxtaposed slots (18) of two juxtaposed storage modules.
